# EUROPÄISCHE PATENTSCHRIFT

(11) **EP 4 496 686 B1**
(45) Veröffentlichungstag und Bekanntmachung des Hinweises auf die Patenterteilung: **06.05.2026**
(21) Anmeldenummer: 23709158.2
(22) Anmeldetag: 01.03.2023
(51) Int. Cl.: B28B 1/00, B28B 13/02, E01C 5/06

(54) **VERFAHREN ZUR HERSTELLUNG VON BODENBELAGSELEMENTEN AUS BETON SOWIE BODENBELAGSELEMENT AUS BETON**
METHOD FOR MANUFACTURING PAVEMENT ELEMENTS MADE OF CONCRETE, AND PAVEMENT ELEMENT MADE OF CONCRETE
PROCÉDÉ DE FABRICATION D'ÉLÉMENTS DE CHAUSSÉE EN BÉTON, ET ÉLÉMENT DE CHAUSSÉE EN BÉTON

(30) Priorität: 21.03.2022 DE 102022106480
(43) Veröffentlichungstag der Anmeldung: 29.01.2025
(73) Patentinhaber: Godelmann GmbH & Co. KG, 92269 Fensterbach (DE)
(72) Erfinder: GODELMANN, Bernhard, 92245 Kümmersbruck (DE)
(74) Vertreter: Glück Kritzenberger Patentanwälte PartGmbB
(86) Internationale Anmeldenummer: PCT/EP2023/055164
(87) Internationale Veröffentlichungsnummer: WO 2023/180029

(56) Entgegenhaltungen:
- DE-A1- 102011 050 974
- DE-A1- 19 615 915
- JP-A- 2003 320 512

## Beschreibung

### Technisches Gebiet

Die Erfindung bezieht sich auf ein Verfahren zur Herstellung von Bodenbelagselementen aus Beton, insbesondere Betonsteinen und/oder Betonplatten, die sich für die Erstellung eines Flächenbelags eignen sowie ferner auf ein Bodenbelagselement aus Beton.

### Stand der Technik

Bodenbelagselemente aus Beton, nämlich Betonsteine zur Erstellung von Flächenbelägen sind aus dem Stand der Technik hinlänglich bekannt. Derartige Bodenbelagselemente bzw. Betonsteine, bei denen es sich in der Regel um so genannte Formsteine aus Beton handelt, sind als Flächenbelagselemente aus Beton zu verstehen, die je nach Anwendungsart platten- oder steinartig geformt sein können und üblicherweise auch als Beton-Pflasterstein bezeichnet werden. Meist werden diese Betonsteine zur Erstellung eines Flächenbelags im Verbund verlegt, weshalb Betonsteine der genannten Art häufig auch als Verbundbetonsteine bzw. Verbundpflastersteine bezeichnet werden.

Bekannt sind hierbei auch mehrschichtig aufgebaute Betonsteine und Beton-Pflastersteine, die zumindest eine Kernschicht und eine Vorsatzschicht aufweisen, wobei die Kernschicht in der Regel aus einem Kernbeton gefertigt ist und einen Kern des Betonsteins bildet und wobei die Vorsatzschicht in der Regel aus einem Vorsatzbeton gefertigt ist und die begehbare bzw. befahrbare Oberseite des Betonsteins, nämlich dessen sichtbare Oberfläche bildet.

Die Herstellung der Betonsteine erfolgt meist mit Hilfe von Schalungsformen und wird beispielsweise maschinell durchgeführt, wobei hierzu bekannt ist, Beton-Pflastersteine in so genannten und eigens dafür vorgesehenen Pflastersteinmaschinen oder -anlagen herzustellen.

In der Regel werden die Beton-Pflastersteine dabei in jeweiligen gewünschten Steinformaten mit Hilfe von jeweils entsprechenden Schalungsformen gefertigt.

Nicht zuletzt aufgrund landschaftsplanerischer oder städtebaulicher Aspekte wird in der jüngeren Zeit zunehmend ein Augenmerk auf die optische Gestaltung und Erscheinung von Betonsteinen der genannten Art gerichtet. Hierbei steigt insbesondere der Bedarf an Betonsteinen, deren sichtbare Oberfläche in besonderer Weise strukturiert und/oder farblich gestaltet ist und damit eine bestimmte Oberflächenstruktur, einen gewünschten optischen und/oder haptischen Oberflächeneffekt und/oder eine gewünschte Farbgebung aufweist.

Beispielsweise ist offenbart die DE 10 2011 050 974 A1 eine Vorrichtung und ein Verfahren zur Herstellung mehrfarbiger Betonsteine. Ferner ist aus dem Stand der Technik beispielsweise bekannt geworden, bei der Fertigung der Betonsteine die Vorsatzbetonschicht vor dem Aushärten zusätzlich strukturgebend zu behandeln, beispielsweise durch Verprägen bzw. Einformen von Vertiefungen oder Überhöhungen, wie dies beispielsweise die DE 10 2010 025 024 A1 angibt.

Ebenso ist aus dem Stand der Technik bekannt geworden, die Vorsatzbetonschicht vor dem Aushärten durch Zugabe bzw. Beaufschlagung mit struktur- oder farbgebendem Material zu behandeln, um hierdurch eine Oberflächengestaltung einzubringen. So beschreibt beispielsweise die Druckschrift DE 10 2004 062 656 A1 ein Verfahren zur Herstellung von Betonsteinen, bei dem auf die Vorsatzbetonschicht vor dem Aushärten eine Portion eines Veredelungsmaterials mittels einer eigens dafür vorgesehenen Aufbringvorrichtung aufgeworfen wird. Die Druckschrift JP 2003 320512 A beschreibt außerdem die Herstellung von Betonsteinen, bei denen die an der Oberseite der Betonsteine angeordnete Vorsatzbetonschicht einen wasserdurchlässigen und einen wasserundurchlässigen Oberflächenabschnit aufweist, um den Betonstein schmutzresistent auszubilden. Diese Druckschrift offenbart zusätzlich ein Bodenbelagselement aus Beton laut dem Oberbegriff des Anspruchs 11.

Nachteilig bei diesen bekannten Verfahren ist jedoch, dass die im Herstellungsprozess für die Erzeugung der Oberflächengestaltung erforderlichen Behandlungs- bzw. Beaufschlagungsschritte zeitaufwändig und damit kostenintensiv sind und ferner hohe konstruktive Anforderungen stellen, da jeweilige spezielle Behandlungs- und/oder Aufbringvorrichtungen benötigt werden. Daher besteht weiterhin Bedarf an verbesserten Verfahren zur Herstellung von Betonsteinen.

### Darstellung der Erfindung

Aufgabe der vorliegenden Erfindung ist es daher ein Verfahren zur Herstellung von Bodenbelagselementen bereitzustellen, das eine einfache maschinelle und dabei zugleich flexible und schnelle Herstellung von Bodenbelagselementen mit besonderen Oberflächeneffekten ermöglicht und das insbesondere die Erzeugung eines gewünschten Oberflächenspiels erlaubt. Diese Aufgabe wird gelöst durch das Verfahren zur Herstellung von Bodenbelagselementen gemäß Patentanspruch 1. Ferner wird zur Lösung der Aufgabe ein Bodenbelagselement gemäß Patentanspruch 11 angegeben. Weitere vorteilhafte Aspekte, Details und Ausgestaltungen der Erfindung ergeben sich aus den abhängigen Ansprüchen, der Beschreibung sowie den Zeichnungen.

Die vorliegende Erfindung stellt ein Verfahren zum Herstellen von Bodenbelagselementen aus Beton bereit, insbesondere ein Verfahren zum Herstellen von Beton-Pflastersteinen oder Betonplatten mittels einer Pflastersteinmaschine. Mit dem erfindungsgemäßen Verfahren werden die Bodenbelagselemente als mehrschichtige Bodenbelagselemente erzeugt und weisen zumindest eine aus einem Kernbeton hergestellte Kernbetonschicht sowie zumindest eine aus einem Vorsatzbeton hergestellte Vorsatzbetonschicht auf. Bei dem Verfahren wird zunächst der Kernbeton in zumindest eine Form eingefüllt und verdichtet. Anschließend wird der Vorsatzbeton auf den verdichteten Kernbeton nachgefüllt und ebenfalls verdichtet. Schließlich werden der Kern- und Vorsatzbeton ausgehärtet. Gemäß einem wesentlichen Aspekt des vorliegenden Verfahrens werden für die Herstellung der Vorsatzbetonschicht zumindest eine erste Vorsatzbetonmischung und zumindest eine zweite Vorsatzbetonmischung vorbereitet und bereitgestellt. Der zum Nachfüllen auf den verdichteten Kernbeton verwendete Vorsatzbeton umfasst dabei jeweils wenigstens einen Anteil der ersten Vorsatzbetonmischung und wenigstens einen Anteil der zweiten Vorsatzbetonmischung, wobei die erste Vorsatzbetonmischung ein gefügedichtes Betonmaterial und die zweite Vorsatzbetonmischung ein haufwerksporiges Betonmaterial ist. Der auf den verdichteten Kernbeton nachgefüllte und die erste und zweite Vorsatzbetonmischung umfassende Vorsatzbeton wird vor dem Verdichten mittels einer Verteileinrichtung auf der Kernbetonschicht verteilt und die erste und zweite Vorsatzbetonmischung werden zumindest abschnittsweise vermengt und/oder teilweise vermischt.

Die Herstellung des Bodenbelagselementes aus Beton, welches vorliegend auch als Beton-Pflasterstein verstanden werden kann und vorzugsweise ein "Pflasterstein aus Beton" gemäß DIN EN 1338 ist, erfolgt mit dem erfindungsgemäßen Verfahren maschinell, vorteilhaft maschinell in einer Pflastersteinmaschine, die zur automatisierten, bevorzugt gesteuerten, insbesondere programmgesteuerten Fertigung konfiguriert ist. Eine derartige Pflastersteinmaschine kann vorliegend auch als eine Vorrichtung oder Anlage zum Fertigen von Beton-Pflastersteinen oder Betonplatten verstanden werden. In anderen Worten ausgedrückt erfolgt somit auch das Verfahren zur Herstellung automatisiert, bevorzugt gesteuert, insbesondere programmgesteuert.

Die zur Durchführung des Verfahrens verwendete "Form" kann auch als Schalungsform verstanden werden und ist vorzugsweise eine bei der Pflastersteinmaschine vorgesehene Form, die für ein einzelnes oder für mehrere Bodenbelagselemente konfiguriert ist, das heißt in einer Form können ein oder mehrere Bodenbelagselemente geformt werden, wobei im letzteren Fall in einer Grundform mehrere Vertiefungen ausgebildet sind, die jeweils auch als Einzelform verstanden werden können. Die Bodenbelagselemente werden vorzugsweise in einem gewünschten Format bzw. Endformat gefertigt, welches vorliegend auch als Nennformat oder Nenngröße bzw. Nennmaß bezeichnet werden kann.

Unter dem Begriff "Vorsatzbetonmischung" wird im Sinne der vorliegenden Erfindung ein Betonmaterial verstanden, das zur Herstellung der Vorsatzbetonschicht verwendet wird, das heißt ein Betonmaterial, aus dem die Vorsatzbetonschicht gebildet wird bzw. gebildet ist. Jede der "Vorsatzbetonmischungen" ist dabei Teil bzw. Anteil des zur Bildung der Vorsatzbetonschicht eingesetzten Betonmaterials, welches im Sinne der Erfindung als "Vorsatzbeton" bezeichnet wird. Die "Vorsatzbetonmischung" - und folglich auch der "Vorsatzbeton" - ist gemäß dem Verständnis der vorliegenden Erfindung somit nicht auf ein gefügedichtes Betonmaterial beschränkt, sondern kann auch ein poröses oder haufwerksporiges Betonmaterial sein.

Bei dem erfindungsgemäßen Verfahren wird als Vorsatzbeton zur Herstellung der Vorsatzbetonschicht zumindest ein Anteil einer ersten Vorsatzbetonmischung und zumindest ein Anteil einer zweiten Vorsatzbetonmischung verwendet, wobei sich die wenigstens zwei Vorsatzbetonmischungen voneinander unterscheiden. Der Vorsatzbeton zur Herstellung der Vorsatzbetonschicht kann somit auch als eine anteilsmäßige Zusammensetzung oder Kombination aus zumindest zwei Vorsatzbetonmischungen verstanden werden.

Dabei liegen die mindestens zwei Vorsatzbetonmischungen in dem Vorsatzbeton bzw. in dem Vorsatzbeton-Material ungemischt oder höchstens teilweise vermischt oder teilweise vermengt vor und sind insbesondere nicht vollständig gemischt, derart, dass der Vorsatzbeton ein einheitliches Vorsatzbetongemisch bzw. als ein einheitliches Vorsatzbetonmaterial ist. In anderen Worten ausgedrückt bilden die mindestens zwei Vorsatzbetonmischungen als nebeneinander existierende Vorsatzbetonmischungen gemeinsam den Vorsatzbeton, so dass die daraus erzeugte Vorsatzbetonschicht mindestens zwei Vorsatzbetonabschnitte aus jeweils unterschiedlichem Vorsatzbeton-Material aufweist.

Die mindestens zwei Vorsatzbetonmischungen unterscheiden sich untereinander in vorzugsweise mindestens einer Eigenschaft, die die optische und/oder haptische Oberflächenerscheinung der Vorsatzbetonschicht betrifft und/oder beeinflusst.

Insbesondere unterscheiden sich die Vorsatzbetonmischungen in dem zur Vorbereitung der jeweiligen Vorsatzbetonmischung verwendeten Grundmaterial, beispielsweise in der Gesteinskörnung und/oder in einem zur Vorbereitung der jeweiligen Vorsatzbetonmischung verwendeten Zuschlagsmaterial. Vorteilhaft ist die mindestens eine unterscheidende Eigenschaft der verschiedenen Vorsatzbetonmischungen beispielsweise die Art der Gesteinskörnung, die Farbe der Gesteinskörnung, die Grobheit bzw. Feinheit der Gesteinskörnung oder die Korngrößenverteilung der Gesteinskörnung. Additiv oder alternativ kann die mindestens eine unterscheidende Eigenschaft der verschiedenen Vorsatzbetonmischungen auch die Art oder Farbe eines Zuschlagsmaterials sein oder eine andere Eigenschaft, welche Einfluss auf die optische und/oder haptische Erscheinung der Oberfläche der Vorsatzbetonschicht nimmt. Selbstverständlich können sich die Vorsatzbetonmischungen auch in mehreren der genannten Eigenschaften unterscheiden.

Unter "Gesteinskörnung" ist im Sinne der Erfindung ein körniges Material zu verstehen, insbesondere natürliche und künstliche Gesteinskörner, wie sie als Grundmaterial zur Betonherstellung verwendet werden. Die Gesteinskörner können hierzu entweder als Rundkorn oder in gebrochener Form vorliegen. Die Gesteinskörnung zur Herstellung der Vorsatzbetonschicht kann vorliegend auch als Sand bezeichnet werden.

Erfindungsgemäß unterscheiden sich die Vorsatzbetonmischungen des zur Herstellung der Vorsatzbetonschicht verwendeten Vorsatzbetons auch dadurch, dass eine der Vorsatzbetonmischungen ein gefügedichtes Betonmaterial und die andere Vorsatzbetonmischung ein haufwerksporiges Betonmaterial ist. Die Vorsatzbetonmischungen können sich dabei allein in diesen Eigenschaften, nämlich "gefügedicht" oder "haufwerksporig" unterscheiden, oder aber zusätzlich dazu in anderen der oberhalb genannten weiteren möglichen unterscheidenden Eigenschaften.

Durch die erfindungsgemäße Verwendung der mindestens zwei Vorsatzbetonmischungen zur Herstellung der Vorsatzbetonschicht weist diese in den fertigen Bodenbelagselementen mindestens zwei unterschiedliche Abschnitte, insbesondere Flächen- bzw. Oberflächenabschnitte auf, wobei ein erster Abschnitt im Wesentlichen oder hauptsächlich das Material der ersten Vorsatzbetonmischung umfasst und daher im Wesentlichen eine erste optische und/oder haptische Oberflächenerscheinung aufweist und wobei ein zweiter Abschnitt im Wesentlichen oder hauptsächlich das Material der zweiten Vorsatzbetonmischung umfasst und daher im Wesentlichen eine unterschiedliche, zweite optische und/oder haptische Oberflächenerscheinung aufweist. Die Oberflächenabschnitte werden vorliegend auch als Vorsatzbetonschichtabschnitte bezeichnet.

Durch das erfindungsgemäße Verfahren können somit Bodenbelagselemente mit einem besonderen Oberflächeneffekt oder Oberflächenspiel gefertigt werden. Als Oberflächeneffekt oder Oberflächenspiel kann insbesondere der Wechsel bzw. der Übergang vom ersten zum zweiten Abschnitt - und *vice versa* - angesehen werden.

Insbesondere können mit dem vorliegenden Verfahren Bodenbelagselemente aus Beton hergestellt werden, bei denen die durch die Vorsatzbetonschicht gebildete Oberseite, die im verlegten Gebrauchszustand des Bodenbelagselements sichtbar ist, eine natürliche Erscheinung hat und einem Naturstein sehr ähnlich ist. Durch die Verwendung von jeweiligen Anteilen einer gefügedichten Vorsatzbetonmischung und einer haufwerksporigen Vorsatzbetonmischung kann diese natürliche Erscheinung zusätzlich verstärkt werden. Damit ist insbesondere auch möglich, Beton-Pflastersteine herzustellen, die optisch und/oder haptisch wie ein Kalkstein oder Kalksandstein erscheinen, beispielsweise Beton-Pflastersteine in Travertin-Optik, das heißt, Beton-Pflastersteine die in ihrer Optik und Haptik einem natürlichen Travertin ähneln bzw. gleichkommen.

Bevorzugt werden die erste und die zweite Vorsatzbetonmischung jeweils in einem eigenen Vorlagebehälter vorbereitet und bereitgestellt. Der Vorteil ist hierbei, dass jede Vorsatzbetonmischung in einem geeigneten Volumen mit den vorgegebenen bzw. gewünschten Komponenten und in vorgegebener bzw. gewünschter Zusammensetzung vorbereitet und vorgehalten werden kann ohne dass die einzelnen Vorsatzbetonmischungen vorzeitig vermengt bzw. teilvermengt oder teilvermischt werden.

Es versteht sich allerdings, dass im Sinne der vorliegenden Erfindung ebenso denkbar ist, dass die Vorsatzbetonmischungen gemeinsam in einen Behälter oder eine Zuführeinrichtung oder gemeinsam in eine Einfülleinrichtung eingebracht werden können, um schließlich der Form zugeführt zu werden. Auf diese Weise ist zum Beispiel eine chaotische Zuführung des aus Anteilen der Vorsatzbetonmischungen bestehenden Vorsatzbetons in die Form möglich. Hierdurch kann insbesondere auch ein Effekt erzeugt und verstärkt werden, dass neben den Vorsatzbetonschichtabschnitten, die nur oder hauptsächlich die erste oder zweite Vorsatzbetonmischung umfassen, auch Misch-Abschnitte oder Misch-Bereiche gebildet werden, die in unterschiedlichem Maße sowohl die erste als auch die zweite Vorsatzbetonmischung umfassen, wobei die erste und zweite Vorsatzbetonmischung in den verschiedenen Mischbereichen in unterschiedlichen Anteilen zueinander vorhanden, vorzugsweise vermischt, beispielsweise nahezu vollständig oder ganz vermischt sind.

Bevorzugt wird die erste Vorsatzbetonmischung mit einer Gesteinskörnung aufweisend eine erste Korngrößenverteilung bzw. mittlere Korngröße vorbereitet und die zweite Vorsatzbetonmischung wird mit einer Gesteinskörnung aufweisend eine zweite Korngrößenverteilung bzw. mittlere Korngröße vorbereitet, wobei die erste und die zweite Korngrößenverteilung bzw. mittlere Korngröße unterschiedlich sind. Das heißt, die erste und die zweite Korngrößenverteilung der jeweiligen Gesteinskörnungen zur Herstellung der ersten und zweiten Vorsatzbetonmischung sind unterschiedlich gewählt. In einfachen Worten ausgedrückt wird für die Herstellung der ersten und zweiten Vorsatzbetonmischung beispielsweise Sand in verschiedenen Feinheitsgraden verwendet.

Hierdurch ergeben sich vorteilhaft unterschiedliche Oberflächenabschnitte in der Vorsatzbetonschicht, nämlich zumindest ein feinerer oder glatterer Vorsatzbetonabschnitt und zumindest ein gröberer oder poröserer bzw. rauerer Vorsatzbetonabschnitt. Vorliegend werden die Begriffe "Vorsatzbetonabschnitt" und "Abschnitt" synonym verwendet. Die Begriffe "feiner" und "gröber" bzw. "rauer" und "glatter" sind hier so zu verstehen, dass einer der mindestens zwei Vorsatzbetonabschnitte relativ zu dem anderen Abschnitt "feiner" bzw. "gröber" erscheint. Dadurch entsteht vorteilhaft ein Oberflächenspiel in bzw. auf der Vorsatzbetonschicht von fein zu grob und *vice versa.*

Die Gesteinskörnungen können in so genannte Korngruppen bzw. Korngrößen eingeteilt und mittels so genannter Sieblinien dargestellt werden. Im Sinne der vorliegenden Erfindung wird mit der Korngröße ein mittlerer Gesteinskorndurchmesser der Gesteinskörner in der Kornzusammensetzung oder ein Bereich eines Gesteinskorndurchmessers (mit Kleinst- und Größtkorn) angegeben. Die Gesteinskörnung kann als Mischung aus Gesteinskörnern verstanden werden, wobei die in der Mischung vorhandenen Gesteinskörner zwar verschiedene Durchmesser aufweisen können, jedoch die Durchmesser innerhalb eines vorgegebenen bzw. begrenzten Bereichs, vorzugsweise innerhalb eines eng begrenzten Bereichs liegen. Die in der Gesteinskörnung vorhandenen Gesteinskörner weisen somit eine vorgegebene Korngrößenverteilung, vorzugsweise in einem engen Bereich, auf und bilden eine Korngruppe. Die Korngröße ist vorliegend auch als Wert für den durchschnittlichen Gesteinskorndurchmesser einer Gesteinskörnung zu verstehen.

Beispielsweise liegt die erste Korngrößenverteilung in einem Bereich von 0 mm bis 2 mm oder 1 mm bis 2 mm (dies kann auch als Korngruppe 0/2 oder 1/2 bezeichnet werden). Die zweite Korngrößenverteilung liegt beispielsweise in einem Bereich von 2 mm bis 4 mm oder 3 mm bis 4 mm (dies kann auch als Korngrupp 2/4 oder 3/4 bezeichnet werden). Die Korngrößen der zur Herstellung der ersten und zweiten Vorsatzbetonmischungen verwendeten Gesteinskörnungen entsprechen somit bevorzugt verschiedenen Sieblinien. Das so erzeugte Oberflächenspiel kann auch als Oberflächenspiel aus Abschnitten mit unterschiedlichen Dichten verstanden werden, nämlich als Wechselspiel zwischen "dichteren" und "weniger dichten" Abschnitten.

Beispielsweise enthält die feine Vorsatzbetonmischung eine Gesteinskörnung der Sieblinie 0 bis 4 mm, insbesondere der Sieblinie 0 bis 3 mm, vorzugsweise 0 bis 2 mm. Die grobe Vorsatzbetonmischung enthält bevorzugt eine Gesteinskörnung der Sieblinie 2 bis 4 mm, insbesondere der Sieblinie 4 bis 8 mm. Bei Verwendung derartiger Gesteinskörnungen in den Vorsatzbetonmischungen können vorteilhaft auch in optimaler Weise Misch-Bereiche zwischen "fein" und "grob" auf der Oberfläche des Beton-Pflastersteins erzeugt werden.

Es versteht sich von selbst, dass sich die unterschiedlichen Gesteinskörnungen, mit denen die verschiedenen Vorsatzbetonmischungen vorbereitet sind, alternativ oder zusätzlich zur Korngrößenverteilung auch in ihrer Farbe und/oder hinsichtlich sonstiger optischer und/oder haptischer Eigenschaften unterscheiden können.

Gemäß einer bevorzugten Ausführungsvariante des vorliegenden Verfahrens werden die erste und die zweite Vorsatzbetonmischung zum Nachfüllen auf den verdichteten Kernbeton der Kernbetonschicht gleichzeitig oder in aufeinanderfolgenden Schritten in die Form eingebracht. Dabei werden die Vorsatzbetonmischungen vorzugsweise über zumindest eine Zuführeinrichtung zugeführt, um dann beispielsweise unmittelbar über die Zuführeinrichtung oder aber unter Zwischenschaltung einer Einfülleinrichtung in die Form eingefüllt zu werden.

Durch das gleichzeitige Nachfüllen der verschiedenen Vorsatzbetonmischungen ist der Nachfüllschritt schneller und die Gefahr eines ungewollten Vermischens der Vorsatzbetonmischungen untereinander wird verringert, so dass hier eine Zeiteinsparung möglich ist und gegebenenfalls ein vorgegebenes, mehr definiertes oder regelmäßigeres Oberflächenspiel mit "schärferen" Übergängen erzeugt werden kann. Andererseits kann durch das aufeinanderfolgende schritt- oder stufenweise Nachfüllen ein zufälligeres, unregelmäßigeres Oberflächenspiel mit eher fließenden Übergängen erzeugt werden, was sich in bestimmten Anwendungsfällen als vorteilhaft erweist, da insbesondere die Oberfläche der Bodenbelagselemente dadurch natursteinartig erscheint und einen natürlicheren Charakter aufweist.

Gemäß einer weiterhin bevorzugten Ausführungsform werden die erste und zweite Vorsatzbetonmischung zum Nachfüllen in die Form gemeinsam und vorzugsweise gleichzeitig mittels einer als gemeinsame Zuführeinrichtung ausgebildeten Zuführeinrichtung zugeführt. Hierdurch ergibt sich der Vorteil der Zeitersparnis und eines konstruktiv einfachen Aufbaus der Vorrichtung zur Herstellung von Bodenbelagselementen. Insbesondere ist hierbei auch eine chaotische Befüllung der Form möglich.

Bevorzugt werden die erste und zweite Vorsatzbetonmischung derart auf den verdichteten Kernbeton nachgefüllt, dass die sich über eine obere Oberfläche des Bodenbelagselements erstreckende Vorsatzbetonschicht durch zumindest einen die erste Vorsatzbetonmischung umfassenden, ersten Vorsatzbetonschichtabschnitt und zumindest einen die zweite Vorsatzbetonmischung umfassenden, zweiten Vorsatzbetonschichtabschnitt gebildet ist, insbesondere dass die Vorsatzbetonschicht durch mehrere voneinander verschiedene Vorsatzbetonschichtabschnitte gebildet ist.

Erfindungsgemäß wird der auf den verdichteten Kernbeton nachgefüllte und die erste und zweite Vorsatzbetonmischung umfassende Vorsatzbeton vor dem Verdichten mittels einer Verteileinrichtung auf der Kernbetonschicht verteilt, wobei die erste und zweite Vorsatzbetonmischung bevorzugt zumindest abschnittsweise vermengt und/oder teilweise vermischt werden können. Das Verteilen des Vorsatzbetons kann hierbei beispielsweise durch Verstreichen oder Verziehen mittels einer als Verstreich- und oder Verzieheinrichtung ausgebildeten Verteileinrichtung erfolgen. Je nach Anwendungsfall und/oder individueller Ausgestaltung können hierbei insbesondere durch zusätzliches abschnittsweises Vermengen und/oder Teilvermischen ein vielfältigeres und/oder zufälligeres Oberflächenspiel erzeugt werden wodurch der die natursteinartige Erscheinung bzw. der natürliche Charakter der Bodenbelagselemente zusätzlich verstärkt wird. Auch können hierbei Marmorierungen erzeugt werden.

Gemäß einer besonders bevorzugten Ausführungsform des Verfahrens werden zusätzlich weitere Vorsatzbetonmischungen vorbereitet und bereitgestellt und der zum Nachfüllen auf den verdichteten Kernbeton verwendete Vorsatzbeton umfasst jeweils ferner wenigstens einen Anteil einer oder mehrerer der weiteren Vorsatzbetonmischungen. Durch Verwendung von mehr als zwei Vorsatzbetonmischungen kann vorteilhaft ein abwechslungsreiches, vielfältiges und diverses Oberflächenspiel erzeugt werden. Insbesondere kann hierüber eine natürliche Erscheinung der Beton-Pflastersteine erreicht werden.

Beispielsweise kann hierbei eine erste Vorsatzbetonmischung als grobe, insbesondere als haufwerksporige Vorsatzbetonmischung einer ersten Farbe, eine zweite Vorsatzbetonmischung als grobe, insbesondere als haufwerksporige Vorsatzbetonmischung einer zweiten Farbe, eine dritte Vorsatzbetonmischung als feine, insbesondere als gefügedichte Vorsatzbetonmischung der ersten Farbe und eine vierte Vorsatzbetonmischung als feine, insbesondere als gefügedichte Vorsatzbetonmischung der zweiten Farbe verwendet werden. Über die durch Verwendung der vier genannten Vorsatzbetonmischungen entstehenden Vorsatzbetonschichtabschnitte einschließlich der ebenso entstehenden diversen Misch-Abschnitte bzw. Misch-Bereiche wird hierbei ein Oberflächenspiel mit zahlreichen Übergängen erzeugt, und zwar sowohl Übergänge farblicher Natur als auch in Bezug auf die "Feinheit" bzw. "Dichte" der Oberfläche. Insbesondere kann hierüber die natürliche Erscheinung der Beton-Pflastersteine verstärkt werden, beispielsweise kann so eine nahezu echte Travertin-Optik erzeugt werden.

Besonders bevorzugt werden die Vorsatzbetonmischungen in festen oder zufällig ausgewählten Anteilen in die Form eingefüllt. Besonders bevorzugt erfolgt die die Bestimmung und/oder Auswahl der Anteile der Vorsatzbetonmischungen automatisiert, insbesondere gesteuert, vorzugsweise programmgesteuert. Insbesondere erfolgt auch die Zuführung der Anteile der Vorsatzbetonmischungen zum Einbringen in die Form vorzugsweise automatisiert, insbesondere gesteuert, vorzugsweise programmgesteuert.

Die Vorsatzbetonschicht wird vorliegend bevorzugt mit einer Schichtdicke in einem Bereich von 4 mm bis 15 mm, vorzugsweise in einem Bereich von 6 mm bis 12 mm und besonders bevorzugt von 8mm bis 10mm hergestellt.

Gemäß einer besonders bevorzugten Ausführungsvariante wird vor dem Einfüllen des Kernbetons in die zumindest eine Form und/oder vor dem Nachfüllen des Vorsatzbetons auf den verdichteten Kernbeton wenigstens ein weiteres Betonmaterial in die Form eingefüllt und verdichtet. Dadurch wird zumindest eine weitere Betonschicht erzeugt, wobei die weitere Betonschicht an derjenigen Seite der Kernbetonschicht angeordnet ist, die von der Vorsatzbetonschicht abgewandt ist und/oder wobei die weitere Betonschicht zwischen der Kernbetonschicht und der Vorsatzbetonschicht angeordnet ist. Derartige zusätzliche Betonschichten können beispielsweise als Betonschichten zur Regulation der Wasserpermeabilität oder der Wasserspeicherung ausgebildet sein oder als Verstärkungsschichten, um die Druckfestigkeit und mechanische Belastbarkeit zu stärken oder sie können derart ausgebildet sein, dass sie als Verschiebeschutz dienen.

Zum Herstellen der Bodenbelagselemente kann eine Vorrichtung verwendet werden, die zumindest eine Pflastersteinmaschine mit wenigstens einer Form umfasst. Die Vorrichtung weist zumindest einen ersten Vorlagebehälter zur Bereithaltung einer ersten Vorsatzbetonmischung, zumindest einen zweiten Vorlagebehälter zur Bereithaltung einer zweiten Vorsatzbetonmischung und wenigstens eine Zuführeinrichtung zum Zuführen der Vorsatzbetonmischungen in Richtung zur Form auf. Die Vorlagebehälter sind mit einem kontrollierbaren, insbesondere steuerbaren Auslass zur kontrollierten Abgabe der Vorsatzbetonmischungen ausgestattet. Die Zuführeinrichtung ist dazu ausgebildet, die Vorsatzbetonmischungen aus den Vorlagebehältern aufzunehmen und in Richtung zur Form zu transportieren.

Bevorzugt ist die mindestens eine Zuführeinrichtung ferner dazu ausgebildet, die Vorsatzbetonmischungen in die Form einzufüllen oder einer Einfülleinrichtung zum Einfüllen in die Form zuzuführen.

Jedem Vorlagebehälter ist vorzugsweise eine Mess- und/oder Dosiereinrichtung zur mengengenauen und/oder dosierten Abgabe der Vorsatzbetonmischungen zugeordnet.

Besonders bevorzugt ist eine mit den Vorlagebehältern, mit der Mess- und/oder Dosiereinrichtung und/oder mit der Zuführeinrichtung kommunizierende Steuer- und/oder Regeleinheit vorgesehen und die Zuführung der Vorsatzbetonmischungen ist gesteuert einstellbar, insbesondere programmgesteuert über zumindest eine in der Steuer- und/ Regeleinheit ausgeführten Steuerroutine.

Weiterhin bevorzugt ist ferner zumindest eine Verteileinrichtung zum Verteilen des Vorsatzbetons in der Form vorgesehen, wobei die Verteileinrichtung vorzugsweise verfahrbar gelagert ist. Weiterhin betrifft die vorliegende Erfindung ein Bodenbelagselement aus Beton, insbesondere Beton-Pflasterstein oder Betonplatte, aufweisend zumindest einen mehrschichtigen Betonsteinkörper mit wenigstens einer zum Verlegen auf einer Bettungsschicht eines Untergrunds geeigneten Betonsteinunterseite und einer dieser gegenüberliegenden Betonsteinoberseite. Der mehrschichtige Betonsteinkörper umfasst zumindest eine Kernbetonschicht und wenigstens eine Vorsatzbetonschicht. Erfindungsgemäß weist die Vorsatzbetonschicht wenigstens einen ersten Vorsatzbetonabschnitt und wenigstens einen zweiten Vorsatzbetonabschnitt auf, wobei der erste Vorsatzbetonabschnitt eine erste Vorsatzbetonmischung und der zweite Vorsatzbetonabschnitt eine sich von der ersten Vorsatzbetonmischung unterscheidende zweite Vorsatzbetonmischung umfasst, wobei das Bodenbelagselement dadurch an einer oberen Oberfläche an der Betonsteinoberseite ein Oberflächenspiel aufweist und wobei der wenigstens eine erste Vorsatzbetonabschnitt ein haufwerksporiges Betonmaterial und der zumindest eine zweite Vorsatzbetonabschnitt ein gefügedichtes Betonmaterial umfasst, wobei die erste und zweite Vorsatzbetonmischung abschnittsweise vermengt und/oder teilweise vermischt sind.

Die Vorsatzbetonschicht weist bevorzugt eine Vielzahl von Vorsatzbetonabschnitten auf, wobei die Vorsatzbetonabschnitte zufällig und unregelmäßig über die Betonsteinoberseite verteilt angeordnet sind.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

### Kurze Beschreibung der Zeichnungen

Die Erfindung soll nachfolgend anhand von Ausführungsbeispielen im Zusammenhang mit den Zeichnungen näher erläutert werden. Es zeigen
- Fig. 1: in einer grob schematischen und stark vereinfachten Teil-Schnittansicht einen Ausschnitt einer Ausführungsform einer Vorrichtung zur Herstellung eines Bodenbelagselements, in einem Zustand während des Einfüllens von Vorsatzbeton in eine Form;
- Fig. 2a: in einer grob schematischen und stark vereinfachten Teil-Schnittansicht einen Ausschnitt einer Ausführungsform der Vorrichtung zur Herstellung eines Bodenbelagselements, in einem Zustand während des Verteilens von Vorsatzbetons;
- Fig. 2b: in einer grob schematischen und stark vereinfachten Teil-Schnittansicht einen Ausschnitt einer Ausführungsform der Vorrichtung zur Herstellung eines Bodenbelagselements, in einem Zustand während des Verdichtens des Betons;
- Fig. 3: sehr vereinfacht und grob schematisch skizziert einen Ausschnitt einer Ausführungsform der Vorrichtung mit mehreren Vorlagebehältern und einer Zuführeinrichtung,
- Fig. 4: sehr vereinfacht und grob schematisch dargestellt eine perspektivische Ansicht einer Ausführungsform eines Bodenbelagselementes mit Oberflächenspiel und
- Fig. 5: sehr vereinfacht und grob schematisch dargestellt eine perspektivische Ansicht einer weiteren Ausführungsform eines Bodenbelagselementes mit Oberflächenspiel.

### Wege zur Ausführung der Erfindung

Für gleiche oder gleich wirkende Elemente der Erfindung werden in den Figuren identische Bezugszeichen verwendet. Ferner werden der Übersichtlichkeit halber nur Bezugszeichen in den einzelnen Figuren dargestellt, die für die Beschreibung der jeweiligen Figur erforderlich sind.

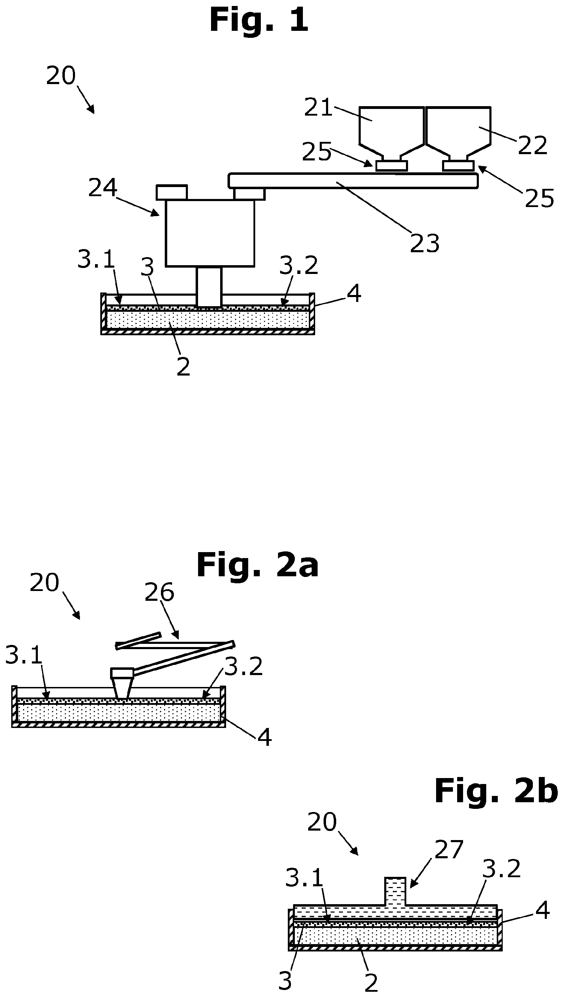

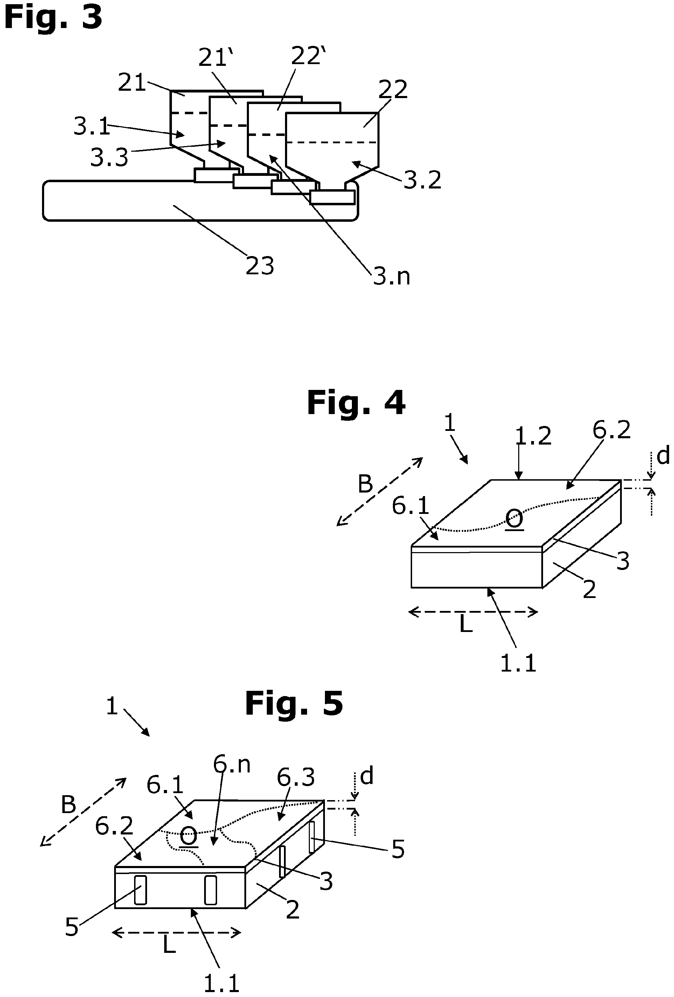

Mit Bezug auf die Figuren 1 sowie 2a und 2b wird das vorliegende Verfahren zur Herstellung von Bodenbelagselementen 1 (in den Figuren 1 bis 2b nicht deutlich zu sehen; siehe hierzu Figuren 4, 5) beispielhaft beschrieben. Die Figuren 1 bis 2b skizzieren dabei rein exemplarisch einzelne, ausgewählte Verfahrensschritte und zeigen dazu, jeweils stark vereinfacht und nur grob schematisch dargestellt, Ansichten bzw. Teil-Schnittansichten jeweiliger Ausschnitte einer Vorrichtung zum Herstellen der Bodenbelagselemente 1, wie sie zur Durchführung des Verfahrens verwendet werden kann. In den Figuren dargestellt ist hierbei beispielsweise eine von der Vorrichtung umfasste Pflastersteinmaschine 20 sowie weitere, bei der Vorrichtung vorzugsweise vorgesehene, zugehörige Einheiten bzw. Einrichtungen.

Bei dem Verfahren werden die Bodenbelagselemente 1 in der Pflastersteinmaschine 20 als mehrschichtige Bodenbelagselemente 1 erzeugt, welche jeweils zumindest eine aus Kernbeton hergestellte Kernbetonschicht 2 und zumindest eine aus Vorsatzbeton hergestellte Vorsatzbetonschicht 3 aufweisen.

Zur Fertigung der Bodenbelagselementes 1 wird bei dem vorliegenden Verfahren in den dargestellten Beispielen zunächst der Kernbeton in eine bei der Pflastersteinmaschine 20 vorgesehene Form 4 eingefüllt und anschließend verdichtet, wodurch die Kernbetonschicht 2 gebildet wird. Lediglich aus Gründen der vereinfachten Darstellung ist die Form 4 in den Figuren als Einzelform für ein Bodenbelagselement 1 gezeigt, das heißt als Form 4 mit nur einer Vertiefung zur Aufnahme des Betonmaterials, es versteht sich aber, dass die Form 4 selbstverständlich auch eine Form 4 für mehrere Bodenbelagselemente 1 sein kann, welche dann entsprechend mehrere Vertiefungen aufweist und jede der Vertiefungen zur Formung jeweils eines Bodenbelagselements 1 ausgebildet ist. Die Form 4 kann vorliegend auch als Schalungsform oder Grundschalungsform bezeichnet werden.

Der Schritt des Einfüllens des Kernbetons in die Form 4, welches auch als Eingießen bzw. Vergießen des Kernbetons verstanden werden kann, ist zwar in den Figuren nicht näher dargestellt, jedoch erfolgt es beispielsweise mittels einer bei der Pflastersteinmaschine 20 vorgesehene Einfülleinrichtung 24, über die der Kernbeton aus einem entsprechenden Vorratsbehälter entnommen und der Form 4 zugeführt wird, beispielsweise mithilfe geeigneter Pumpen oder durch anderweitige, geeignete und dem Fachmann bekannte Fördermittel.

Die Einfülleinrichtung 24 umfasst vorzugsweise einen Einfüllstutzen, der in die Form 4 hineinreicht, so dass der Kernbeton möglichst spritzfrei und sauber eingefüllt werden kann. Die Einfülleinrichtung 24 kann beispielsweise ein trichterartiges Füllgefäß umfassen, welches den Einfüllstutzen trägt. Das Füllgefäß und oder der Einfüllstutzen kann beispielsweise über ein flexibles Anschlussstück, zum Beispiel über einen Schlauch, an weitere Einheiten der Einfülleinrichtung 24 verbunden und/oder insbesondere an einen Betonvorrat angeschlossen werden. Insbesondere ist der Einfüllstutzen oder die gesamte Einfülleinrichtung 24 gegenüber der Form 4 bewegbar und zwar vorzugsweise höhenverstellbar sowie ferner verfahrbar, und zwar insbesondere verfahrbar sowohl in einer x-Richtung und y-Richtung bezogen auf eine die Form 4 aufnehmende Ebene, so dass eine gleichmäßige Befüllung der Form 4 erleichtert bzw. sichergestellt werden kann.

In einem nächsten Teilschritt des Herstellungsverfahrens wird der in die Form 4 eingefüllte Kernbeton verdichtet, wobei die Pflastersteinmaschine 20 hierzu eine Verdichtungsvorrichtung, beispielsweise eine Presse oder einen Stempel 27 aufweist. Das Verdichten des Kernbetons geht aus den Figuren nicht explizit hervor, jedoch kann es ähnlich wie in Figur 2b dargestellt erfolgen, jedoch vor dem Einfüllen des Vorsatzbetons in die Form 4. Ebenso kann das Verdichten des Kernbetons durch Rütteln erfolgen.

In einem wiederum nächsten Teilschritt des Verfahrens, welcher in der stark vereinfachten Darstellung der Figur 1 skizziert ist, wird auf den verdichteten Kernbeton, nämlich auf die vorbereitete Kernbetonschicht 2 ein Vorsatzbeton nachgefüllt und dadurch eine Vorsatzbetonschicht 3 gebildet.

Die Vorsatzbetonschicht 3 wird dabei aus einer ersten Vorsatzbetonmischung 3.1 und einer zweiten Vorsatzbetonmischung 3.2 hergestellt. Jede der Vorsatzbetonmischungen 3.1, 3.2 wird dabei in einem eigenen Vorlagebehälter 21, 22 vorbereitet und bereitgestellt, nämlich die erste Vorsatzbetonmischung 3.1 in dem ersten Vorlagebehälter 21 und die zweite Vorsatzbetonmischung 3.2 in dem zweiten Vorlagebehälter 22. Aus jedem dieser beiden Vorlagebehälter 21, 22 wird eine vorbestimmte Menge der jeweiligen Vorsatzbetonmischung 3.1, 3.2 entnommen bzw. abgegeben, einer Zuführeinrichtung 23 zugeführt und über diese Zuführeinrichtung 23 werden die beiden Vorsatzbetonmischungen 3.1, 3.2 in Richtung zur Form 4 gefördert.

Der zum Nachfüllen auf den verdichteten Kernbeton verwendete Vorsatzbeton umfasst damit jeweils zumindest einen Anteil der ersten Vorsatzbetonmischung 3.1 und wenigstens einen Anteil der zweiten Vorsatzbetonmischung 3.2.

Die erste und die zweite Vorsatzbetonmischung 3.1, 3.2 sind unterschiedlich zueinander und unterscheiden sich beispielsweise dadurch, dass für die Vorbereitung der ersten Vorsatzbetonmischung 3.1 eine Gesteinskörnung, insbesondere ein Sand, aufweisend eine erste Korngrößenverteilung verwendet wird und dass für die Vorbereitung der zweiten Vorsatzbetonmischung 3.2 eine Gesteinskörnung, insbesondere ein Sand, aufweisend eine zweite Korngrößenverteilung verwendet wird. Die erste und die zweite Korngrößenverteilung der jeweiligen Gesteinskörnungen sind dabei unterschiedlich gewählt.

Die Korngrößenverteilung kann vorliegend auch als mittlere Korngröße bzw. durchschnittliche Korngröße in der Gesteinskörnung verstanden werden. Beispielsweise liegt die erste Korngrößenverteilung in einem Bereich von 0 mm bis 2 mm (dies kann auch als Korngruppe 0/2 bezeichnet werden) und die zweite Korngrößenverteilung in einem Bereich von 2 mm bis 4 mm (dies kann auch als Korngrupp 2/4 bezeichnet werden).

In dem dargestellten Beispiel gemäß Figur 1 erfolgt die Entnahme bzw. Ausgabe oder Übergabe der jeweiligen Vorsatzbetonmischungen 3.1, 3.2 aus den zugehörigen Vorlagebehältern 21, 22 sowie die Übergabe der Vorsatzbetonmischungen 3.1, 3.2 an die Zuführeinrichtung 23 mittels eines jeweiligen kontrollierbaren, insbesondere steuerbaren Auslasses, mit dem jeder der Vorlagebehälter 21, 22 der beispielhaft gezeigten Ausführungsform ausgestattet ist und der für eine kontrollierte Abgabe der Vorsatzbetonmischungen 3.1, 3.2 eingerichtet ist. Für eine insbesondere mengengenaue und/oder dosierte Abgabe der Vorsatzbetonmischungen 3.1, 3.2 ist bei der Ausführungsform gemäß Figur 1 jedem Vorlagebehälter 21, 22 bzw. jedem zugehörigen Auslass jeweils eine Mess- und/oder Dosiereinrichtung 25 zugeordnet.

Der kontrollierbare, insbesondere steuerbare Auslass der Vorlagebehälter 21, 22 und insbesondere auch die Mess- und/oder Dosiereinrichtung 25 stehen beispielsweise mit einer in den Figuren nicht dargestellten Steuereinrichtung bzw. Steuereinheit der Vorrichtung in kommunizierender Verbindung, so dass die kontrollierte, insbesondere mengengenaue und/oder dosierte Abgabe der jeweiligen Anteile der Vorsatzbetonmischungen 3.1, 3.2 durch die Steuereinrichtung bzw. Steuereinheit gesteuert werden kann.

Die Zuführeinrichtung 23 des dargestellten Beispiels ist als eine gemeinsame Zuführeinrichtung für beide Vorsatzbetonmischungen 3.1, 3.2 ausgebildet und insbesondere dazu eingerichtet, die aus beiden Vorlagebehältern 21, 22 ausgegebenen Vorsatzbetonmischungen 3.1, 3.2 von den Vorlagebehältern 21, 22 aufzunehmen und in Richtung zur Form 4 zu transportieren. Die Zuführeinrichtung 23 kann ein Förderband oder ein anderer geeigneter Förderer sein.

Im Beispiel der Figur 1 ist die Zuführeinrichtung 23 so konzipiert, dass sie mit der oberhalb bereits beschriebenen verfahrbaren Einfüllvorrichtung 24 zusammenwirkt und die Vorsatzbetonmischungen 3.1, 3.2 der Einfülleinrichtung 24 zuführt, über welche schließlich die Vorsatzbetonmischungen 3.1, 3.2 in die Form 4 eingefüllt und so auf den verdichteten Kernbeton nachgefüllt werden. Alternativ kann jedoch für den Vorsatzbeton auch eine zweite Einfüllvorrichtung vorgesehen sein, um eventuelle Vermischungen von Kernbeton und Vorsatzbeton zu vermeiden.

In einer weiteren alternativen Ausführungsform kann die Zuführeinrichtung 23 auch dazu ausgebildet sein, die Vorsatzbetonmischungen 3.1, 3.2 unmittelbar in die Form 4 einzufüllen, das heißt ohne Zwischenschaltung einer separat vorgesehenen Einfüllvorrichtung. In einer solchen, nicht in den Figuren dargestellten Ausführungsform weist die Zuführeinrichtung 23 beispielsweise an ihrem der Form 4 zugewandten Ende einen Füllabschnitt auf, über den die Vorsatzbetonmischungen 3.1, 3.2 schließlich in die Form 4 eingebracht werden können.

Die erste und zweite Vorsatzbetonmischung 3.1, 3.2 werden der Form 4 derart zugeführt und auf den verdichteten Kernbeton nachgefüllt, dass die Vorsatzbetonmischungen 3.1, 3.2 über den gesamten Zuführ- und Einfüllschritt hinweg eine heterogene Vorsatzbeton-Masse bilden, in der die zwei Vorsatzbetonmischungen 3.1, 3.2 ungemischt oder höchstens teilweise vermengt bzw. teilweise vermischt vorliegen. Die zwei Vorsatzbetonmischungen 3.1, 3.2 sind somit in der heterogenen Vorsatzbeton-Masse zumindest zum Teil als nebeneinander vorkommende Komponenten vorhanden bzw. bleiben als solche bestehen und zwar insbesondere bis zur endgültigen Fertigstellung des Bodenbelagselementes 1.

Die Zuführung bzw. das Einfüllen der Vorsatzbetonmischungen 3.1, 3.2 in die Form 4 kann auch chaotisch bzw. im Zufallsprinzip erfolgen. In einer nicht dargestellten alternativen Ausführungsform können die Vorsatzbetonmischungen 3.1, 3.2 auch in einem gemeinsamen Behälter bereitgestellt und von diesem aus der Form 4 zugeführt und eingefüllt werden.

Während und/oder nach dem Einfüllen des Vorsatzbetons in die Form 4 kann der auf den verdichteten Kernbeton nachgefüllte und die erste und zweite Vorsatzbetonmischung 3.1, 3.2 umfassende Vorsatzbeton optional mittels einer Verteileinrichtung 26 auf der Kernbetonschicht 2 verteilt werden, wie dies in Figur 2a angedeutet ist. Beispielsweise kann das Verteilen durch ein Verziehen oder Verstreichen erfolgen, wobei bei diesem Schritt des Verziehens bzw. Verstreichens in Abhängigkeit vom Anwendungsfall und/oder von individuellen Gestaltungswünschen die erste und zweite Vorsatzbetonmischung 3.1, 3.2 beispielsweise auch in bestimmten Bereichen vermengt und/oder teilweise vermischt werden können, zum Beispiel in der Art zur Erzeugung einer Marmorierung. Für ein Verziehen oder Verstreichen weist die Verteileinrichtung 26 insbesondere ein geeignetes Verzieh- und/oder Verstreichwerkzeug auf.

Wie in Figur 2b skizziert ist, wird der Vorsatzbeton nach dem Nachfüllen auf die Kernbetonschicht 2 - und gegebenenfalls nach dem optionalen Verteilen - verdichtet, und zwar wiederum mit Hilfe der Presse bzw. des Stempels 27. Schließlich werden Kern- und Vorsatzbeton ausgehärtet.

Aufgrund der Verwendung des aus jeweils wenigstens einem Anteil der ersten und zweiten Vorsatzbetonmischung 3.1, 3.2 aufweisenden Vorsatzbetons zur Erzeugung der Vorsatzbetonschicht 3 sowie aufgrund des oberhalb beschriebenen Zuführens und Einfüllens der jeweiligen Anteile der ersten und zweiten Vorsatzbetonmischung 3.1, 3.2 ist die sich über eine obere Oberfläche O an einer Betonsteinoberseite 1.2 (siehe Figuren 4 und 5) des Bodenbelagselements 1 erstreckende Vorsatzbetonschicht 3 durch zumindest einen die erste Vorsatzbetonmischung 3.1 umfassenden, ersten Vorsatzbetonschichtabschnitt 6.1 und zumindest einen die zweite Vorsatzbetonmischung 3.2 umfassenden, zweiten Vorsatzbetonschichtabschnitt 6.2 gebildet.

Mit Bezug auf die Figuren 4 und 5 werden nun mehr im Detail verschiedene beispielhafte Bodenbelagselemente 1 beschrieben, die mittels des vorliegenden Verfahrens hergestellt sind. Die Figuren 4 und 5 zeigen jeweils eine perspektivische Ansicht eines Bodenbelagselements 1 in einer sehr vereinfachten und grob schematischen Darstellung.

Wie oberhalb im Zusammenhang mit dem Herstellungsverfahren bereits erläutert, sind die Bodenbelagselemente 1 als mehrschichtige Betonsteine ausgebildet und weisen jeweils einen mehrschichtigen, im den Beispiel der Figuren im Wesentlichen quaderförmigen, Betonsteinkörper mit einer Kernbetonschicht 2 und einer Vorsatzbetonschicht 3 auf. Das Bodenbelagselement 1 bzw. der Betonsteinkörper hat ein vorgegebenes Format mit einer Länge L und einer Breite B und weist wenigstens eine zum Verlegen auf einer Bettungsschicht eines Untergrunds geeignete Betonsteinunterseite 1.1 und eine dieser gegenüberliegende Betonsteinoberseite 1.2 auf, entlang derer sich die obere Oberfläche O des Bodenbelagselements 1 erstreckt.

An den Seitenflächen des Bodenbelagselements 1 können Vorsprünge 5, beispielsweise rippenoder nasenartige Vorsprünge 5 vorgesehen sein (siehe Figur 5), die als Abstandshalter oder Abstandsnasen dienen und beim Verlegend der Bodenbelagselemente 1 im Verbund dafür sorgen, dass im verlegten Flächenverband ein Mindestabstand zwischen den jeweiligen benachbarten Bodenbelagselemente 1 eingehalten ist und dadurch Fugen mit einer vorgegebene Mindestbreite erzeugt sind.

Die obere Oberfläche O ist durch die Vorsatzbetonschicht 3 gebildet, welche eine Schichtdicke d aufweist, die in den dargestellten Beispielen etwa 10 mm beträgt. Die Vorsatzbetonschicht 3 umfasst mehrere Vorsatzbetonschichtabschnitte 6.1, 6.2, 6.3, 6n, die sich hinsichtlich ihrer optischen und/oder haptischen Oberflächenerscheinung bzw. -struktur unterscheiden.

Für das in Figur 4 dargestellte Beispiel wurden zur Erzeugung der Vorsatzbetonschicht 3 zwei verschiedene Vorsatzbetonmischung 3.1, 3.2 verwendet, so dass das Bodenbelagselement 1 an seiner Betonsteinoberseite 1.2 einen ersten und einen zweiten Vorsatzbetonschichtabschnitt 6.1, 6.2 aufweist. Die Vorsatzbetonschichtabschnitte 6.1, 6.2 sind an der oberen Oberfläche O sichtbar und bilden bzw. erzeugen damit einen Oberflächeneffekt bzw. ein Oberflächenspiel. Der Oberflächeneffekt bzw. das Oberflächenspiel ist im dargestellten Beispiel ein Übergang von einer feineren, glatteren Oberfläche zu einer gröberen, raueren Oberfläche, und zwar bedingt durch die jeweils verwendeten Vorsatzbetonmischungen 3.1, 3.2, die mit Gesteinskörnungen unterschiedlicher Korngröße hergestellt sind.

Bei dem in Figur 5 dargestellten Beispiel ist die Vorsatzbetonschicht 3 unter Verwendung von vier verschiedenen Vorsatzbetonmischungen 3.1, 3.2, 3.3, 3.n hergestellt, wobei zur Herstellung des beispielshaften Bodenbelagselements 1 die vier verschiedenen Vorsatzbetonmischungen 3.1, 3.2, 3.3, 3.n in vier separaten Vorlagebehältern 21, 22, 21', 22' vorgehalten sind, wie Figur 3 exemplarisch zeigt. Die vier Vorsatzbetonmischungen 3.1, 3.2, 3.3, 3.n können wiederum über eine gemeinsame Zuführeinrichtung 23 zugeführt werden und in die Form 4 eingefüllt werden, so dass das fertige Bodenbelagselement 1 an seiner Betonsteinoberseite 1.2 mindestens einen ersten bis vierten Vorsatzbetonschichtabschnitt 6.1, 6.2, 6.3, 6.n aufweist.

Auch in diesem Fall sind die Vorsatzbetonschichtabschnitte 6.1-6.n an der oberen Oberfläche O sichtbar und bilden bzw. erzeugen damit einen Oberflächeneffekt bzw. ein Oberflächenspiel.

Je nach Art des Einfüllens der Vorsatzbetonmischungen 3.1, 3.2, 3.3, 3.n in die Form 4 und abhängig davon, ob nach dem Einfüllen ein Schritt zum Verteilen, insbesondere zum Verziehen oder Verstreichen oder ein Teilmischen durchgeführt wird, können bei Verwendung mehrerer Vorsatzbetonmischungen 3.1, 3.2, 3.3, 3.n selbstverständlich auch sich unterscheidende Vorsatzbetonschichtabschnitte 6.1, 6.2, 6.3, 6.n erzeugt werden, die über die Anzahl der verwendeten Vorsatzbetonmischungen 3.1, 3.2, 3.3, 3.n hinausgehen.

Bei dem Verfahren zur Herstellung der Bodenbelagselemente 1 können sowohl die Anzahl der verwendeten Vorsatzbetonmischungen 3.1, 3.2, 3.3 - 3.n wie auch eine gewünschte Zusammenstellung aus den zur Verfügung stehenden Vorsatzbetonmischungen 3.1, 3.2, 3.3 - 3.n frei gewählt werden. Auch können die Mengenverhältnisse der jeweiligen verwendeten Vorsatzbetonmischungen 3.1, 3.2, 3.3 - 3.n, das heißt deren jeweiligen Anteile in dem Vorsatzbeton frei gewählt werden. Die Bestimmung oder Auswahl der Anzahl der Vorsatzbetonmischungen 3.1, 3.2, 3.3 - 3.n, deren Zusammenstellung sowie die entsprechenden Anteile der jeweiligen verwendeten Vorsatzbetonmischungen 3.1, 3.2, 3.3 - 3.n können in vorbestimmter Weise nach festen Vorgaben erfolgen oder aber in zufälliger Weise ausgewählt werden.

Die Zuführung, insbesondere auch das Einfüllen der jeweiligen Anteile der Vorsatzbetonmischungen 3.1, 3.2, 3.3 - 3.n in die Form 4 kann in automatisierter, insbesondere gesteuerter Weise erfolgen, und zwar je nach Anwendung und Gestaltungswunsch gleichzeitig oder in aufeinanderfolgenden Schritten.

Mit dem vorliegenden Verfahren können je nach Bedarf und individuellen Gestaltungswünschen Bodenbelagselemente 1 hergestellt werden, deren Oberfläche O in Natursteinoptik erscheint und insbesondere eine naturgetreue Nachahmung von Natursteinen bildet. Vorteilhaft können Bodenbelagselemente 1 hergestellt werden, die ein Oberflächenspiel bzw. einen Oberflächeneffekt aufweisen, bei dem optisch und/oder haptisch andersartige Oberflächenabschnitte wechseln, wobei fließende Übergänge zwischen einzelnen Oberflächenabschnitten genauso möglich sind wie scharfe Abschnittswechsel.

### Bezugszeichenliste

- 1: Bodenbelagselement
- 1.1: Betonsteinunterseite
- 1.2: Betonsteinoberseite
- 2: Kernbetonschicht
- 3: Vorsatzbetonschicht
- 3.1: erste Vorsatzbetonmischung
- 3.2: zweite Vorsatzbetonmischung
- 3.3, 3.n: weitere Vorsatzbetonmischung
- 4: Form
- 5: Vorsprung
- 6.1-6.n: Vorsatzbetonschichtabschnitte
- 20: Pflastersteinmaschine
- 21, 21': Vorlagebehälter
- 22, 22': Vorlagebehälter
- 23: Zuführeinrichtung
- 24: Einfülleinrichtung
- 25: Mess- und/oder Dosiereinrichtung
- 26: Verteileinrichtung
- 27: Presse oder Stempel
- B: Breite des Bodenbelagselements
- d: Schichtdicke der Vorsatzbetonschicht
- L: Länge des Bodenbelagselements
- O: obere Oberfläche

## Patentansprüche

1. Verfahren zum Herstellen von Bodenbelagselementen (1) aus Beton, insbesondere zum Herstellen von Beton-Pflastersteinen oder Betonplatten mittels einer Pflastersteinmaschine (20),
wobei die Bodenbelagselemente (1) als mehrschichtige Bodenbelagselemente (1) erzeugt werden und zumindest eine aus einem Kernbeton hergestellte Kernbetonschicht (2) sowie zumindest eine aus einem Vorsatzbeton hergestellte Vorsatzbetonschicht (3) aufweisen, wobei bei dem Verfahren der Kernbeton in zumindest eine Form (4) eingefüllt und verdichtet wird, wobei anschließend der Vorsatzbeton auf den verdichteten Kernbeton nachgefüllt und ebenfalls verdichtet wird und wobei der Kern- und Vorsatzbeton ausgehärtet werden,
wobei für die Herstellung der Vorsatzbetonschicht (3) zumindest eine erste Vorsatzbetonmischung (3.1) und zumindest eine zweite Vorsatzbetonmischung (3.2) vorbereitet und bereitgestellt werden und wobei der zum Nachfüllen auf den verdichteten Kernbeton verwendete Vorsatzbeton jeweils wenigstens einen Anteil der ersten Vorsatzbetonmischung (3.1) und wenigstens einen Anteil der zweiten Vorsatzbetonmischung (3.2) umfasst, wobei die erste Vorsatzbetonmischung (3.1) ein gefügedichtes Betonmaterial und die zweite Vorsatzbetonmischung (3.2) ein haufwerksporiges Betonmaterial ist, wobei der auf den verdichteten Kernbeton nachgefüllte und die erste und zweite Vorsatzbetonmischung (3.1, 3.2) umfassende Vorsatzbeton vor dem Verdichten mittels einer Verteileinrichtung (26) auf der Kernbetonschicht (2) verteilt wird und wobei die erste und zweite Vorsatzbetonmischung (3.1, 3.2) zumindest abschnittsweise vermengt und/oder teilweise vermischt werden.

2. Verfahren nach Anspruch 1, **dadurch gekennzeichnet, dass** die erste und die zweite Vorsatzbetonmischung (3.1, 3.2) jeweils in einem eigenen Vorlagebehälter (21, 22) vorbereitet und bereitgestellt werden.

3. Verfahren nach Anspruch 1 oder 2, **dadurch gekennzeichnet, dass** die erste Vorsatzbetonmischung (3.1) mit einer Gesteinskörnung aufweisend eine erste Korngrößenverteilung vorbereitet wird und dass die zweite Vorsatzbetonmischung (3.2) mit einer Gesteinskörnung aufweisend eine zweite Korngrößenverteilung vorbereitet wird, wobei die erste und die zweite Korngrößenverteilung unterschiedlich sind.

4. Verfahren nach einem der Ansprüche 1 bis 3, **dadurch gekennzeichnet, dass** die erste und die zweite Vorsatzbetonmischung (3.1, 3.2) zum Nachfüllen auf den verdichteten Kernbeton der Kernbetonschicht (2) gleichzeitig oder in aufeinanderfolgenden Schritten in die Form (4) eingebracht werden, wobei die erste und zweite Vorsatzbetonmischung (3.1, 3.2) zum Nachfüllen in die Form (4) vorzugsweise über zumindest eine Zuführeinrichtung (23) zugeführt werden und/oder dass die Vorsatzbetonmischungen (3.1, 3.2) chaotisch in die in die Form (4) eingebracht werden.

5. Verfahren nach Anspruch 4, **dadurch gekennzeichnet, dass** die erste und zweite Vorsatzbetonmischung (3.1, 3.2) zum Nachfüllen in die Form (4) gemeinsam und vorzugsweise gleichzeitig mittels einer als gemeinsame Zuführeinrichtung (23) ausgebildeten Zuführeinrichtung (23) zugeführt werden.

6. Verfahren nach einem der vorhergehenden Ansprüche, **dadurch gekennzeichnet, dass** die erste und zweite Vorsatzbetonmischung (3.1, 3.2) derart auf den verdichteten Kernbeton nachgefüllt werden, dass die sich über eine obere Oberfläche (O) des Bodenbelagselements (1) erstreckende Vorsatzbetonschicht (3) durch zumindest einen die erste Vorsatzbetonmischung (3.1) umfassenden, ersten Vorsatzbetonschichtabschnitt (6.1) und zumindest einen die zweite Vorsatzbetonmischung (3.2) umfassenden, zweiten Vorsatzbetonschichtabschnitt (6.2) gebildet ist, insbesondere dass die Vorsatzbetonschicht (3) durch mehrere voneinander verschiedene Vorsatzbetonschichtabschnitte (6.1, 6.2 - 6.n) gebildet ist.

7. Verfahren nach einem der vorhergehenden Ansprüche, **dadurch gekennzeichnet, dass** zusätzlich weitere Vorsatzbetonmischungen (3.3 - 3.n) vorbereitet und bereitgestellt werden und dass der zum Nachfüllen auf den verdichteten Kernbeton verwendete Vorsatzbeton jeweils ferner wenigstens einen Anteil einer oder mehrerer der weiteren Vorsatzbetonmischungen (3.3 - 3.n) umfasst.

8. Verfahren nach einem der vorhergehenden Ansprüche, **dadurch gekennzeichnet, dass** die Vorsatzbetonmischungen (3.1, 3.2, 3.3 - 3.n) in festen oder zufällig ausgewählten Anteilen in die Form (4) eingefüllt werden, wobei die Bestimmung und/oder Auswahl der Anteile der Vorsatzbetonmischungen (3.1, 3.2, 3.3 - 3.n) sowie insbesondere auch deren Zuführung zum Einbringen in die Form (4) vorzugsweise automatisiert, insbesondere gesteuert erfolgt.

9. Verfahren nach einem der vorhergehenden Ansprüche, **dadurch gekennzeichnet, dass** die Vorsatzbetonschicht (3) mit einer Schichtdicke (d) in einem Bereich von 4 mm bis 15 mm, vorzugsweise in einem Bereich von 6 mm bis 12 mm und besonders bevorzugt von 8mm bis 10mm hergestellt wird.

10. Verfahren nach einem der vorhergehenden Ansprüche, **dadurch gekennzeichnet, dass** vor dem Einfüllen des Kernbetons in zumindest eine Form (4) und/oder vor dem Nachfüllen des Vorsatzbetons auf den verdichteten Kernbeton wenigstens ein weiteres Betonmaterial in die Form eingefüllt und verdichtet wird und dadurch zumindest eine weitere Betonschicht erzeugt wird, wobei die weitere Betonschicht an der der Vorsatzbetonschicht (3) abgewandten Seite der Kernbetonschicht und/oder zwischen der Kernbetonschicht (2) und der Vorsatzbetonschicht (3) angeordnet ist.

11. Bodenbelagselement (1) aus Beton, insbesondere Beton-Pflasterstein oder Betonplatte, aufweisend zumindest einen mehrschichtigen Betonsteinkörper mit wenigstens einer zum Verlegen auf einer Bettungsschicht eines Untergrunds geeigneten Betonsteinunterseite (1.1) und einer dieser gegenüberliegenden Betonsteinoberseite (1.2), wobei der mehrschichtige Betonsteinkörper zumindest eine Kernbetonschicht (2) und wenigstens eine Vorsatzbetonschicht (3) umfasst, wobei die Vorsatzbetonschicht (3) wenigstens einen ersten Vorsatzbetonabschnitt (6.1) und wenigstens einen zweiten Vorsatzbetonabschnitt (6.2) aufweist, wobei der erste Vorsatzbetonabschnitt (6.1) eine erste Vorsatzbetonmischung (3.1) und der zweite Vorsatzbetonabschnitt (6.2) eine sich von der ersten Vorsatzbetonmischung (3.1) unterscheidende zweite Vorsatzbetonmischung (3.1) umfasst, wobei das Bodenbelagselement (1) dadurch an einer oberen Oberfläche (O) an der Betonsteinoberseite (1.2) ein Oberflächenspiel aufweist und wobei der wenigstens eine erste Vorsatzbetonabschnitt (6.1) ein haufwerksporiges Betonmaterial und der zumindest eine zweite Vorsatzbetonabschnitt (6.2) ein gefügedichtes Betonmaterial umfasst, **dadurch gekennzeichnet, dass** die erste und zweite Vorsatzbetonmischung (3.1, 3.2) abschnittsweise vermengt und/oder teilweise vermischt sind.

12. Bodenbelagselement (1) nach Anspruch 11, **dadurch gekennzeichnet, dass** die Vorsatzbetonschicht (3) eine Vielzahl von Vorsatzbetonabschnitten (6.1 - 6.n) aufweist, wobei die Vorsatzbetonabschnitte (6.1 - 6.n) zufällig und unregelmäßig über die Betonsteinoberseite (1.2) verteilt angeordnet sind.

## Claims

1. Method for producing floor covering elements (1) made of concrete, in particular for producing concrete paving stones or concrete slabs using a paving stone machine (20), wherein the floor covering elements (1) are produced as multi-layer floor covering elements (1) and comprise at least one core concrete layer (2) made from core concrete and at least one face concrete layer (3) made from face concrete,
wherein, in the method, the core concrete is filled into at least one mould (4) and compacted, wherein the face concrete is then filled onto the compacted core concrete and also compacted, and wherein the core concrete and face concrete are cured,
wherein at least a first face concrete mixture (3.1) and at least a second face concrete mixture (3.2) are prepared and provided for the production of the face concrete layer (3), and wherein the face concrete used for filling onto the compacted core concrete comprises at least a proportion of the first face concrete mixture (3.1) and at least a portion of the second face concrete mixture (3.2), wherein the first face concrete mixture (3.1) is a dense concrete material and the second face concrete mixture (3.2) is a porous concrete material, wherein the face concrete, being filled onto the compacted core concrete and comprising the first and second face concrete mixtures (3.1, 3.2) is distributed on the core concrete layer (2) by means of a distribution device (26) before compaction, and wherein the first and second face concrete mixtures (3.1, 3.2) are at least partially mixed and/or partially blended.

2. Method according to claim 1, **characterised in that** the first and second face concrete mixtures (3.1, 3.2) are each prepared and provided in an own storage container (21, 22).

3. Method according to claim 1 or 2, **characterised in that** the first face concrete mixture (3.1) is prepared with an aggregate having a first grain size distribution and the second face concrete mixture (3.2) is prepared with an aggregate having a second grain size distribution, wherein the first and second grain size distributions are different.

4. Method according to one of claims 1 to 3, **characterised in that** the first and second face concrete mixtures (3.1, 3.2) for filling onto the compacted core concrete of the core concrete layer (2) are introduced into the mould simultaneously or in successive steps (4), wherein the first and second face concrete mixtures (3.1, 3.2) for filling into the mould (4) are preferably fed via at least one feed device (23) and/or **in that** the face concrete mixtures (3.1, 3.2) are fed chaotically into the mould (4).

5. Method according to claim 4, **characterised in that** the first and second facie concrete mixtures (3.1, 3.2) for filling into the mould (4) are fed together and preferably simultaneously by means of a feed device (23) designed as a common feed device (23).

6. Method according to one of the preceding claims, **characterised in that** the first and second face concrete mixtures (3.1, 3.2) are filled onto the compacted core concrete in such a way that the face concrete layer (3) extending over an upper surface (O) of the floor covering element (1) is formed by at least one first face concrete layer section (6.1) comprising the first face concrete mixture (3.1) and at least one second face concrete layer section (6.2) comprising the second face concrete mixture (3.2). (3.1), in particular that the face concrete layer (3) is formed by several face concrete layer sections (6.1, 6.2 - 6.n) that differ from one another.

7. Method according to one of the preceding claims, **characterised in that** additional face concrete mixtures (3.3 - 3.n) are prepared and provided and that the face concrete used for filling onto the compacted core concrete also comprises at least a portion of one or more of the additional face concrete mixtures (3.3 - 3.n).

8. Method according to one of the preceding claims, **characterised in that** the face concrete mixtures (3.1, 3.2, 3.3 - 3.n) are filled into the mould (4) in fixed or randomly selected portions, wherein the determination and/or selection of the portions of the face concrete mixtures (3.1, 3.2, 3.3 - 3.n) and, in particular, their feeding for introduction into the mould (4) is preferably carried out in an automated manner, in particular in a controlled manner.

9. Method according to one of the preceding claims, **characterised in that** the face concrete layer (3) is produced with a layer thickness (d) in a range from 4 mm to 15 mm, preferably in a range from 6 mm to 12 mm and particularly preferably from 8 mm to 10 mm.

10. Method according to one of the preceding claims, **characterised in that**, before filling the core concrete into at least one mould (4) and/or before filling the face concrete onto the compacted core concrete, at least one further concrete material is filled into the mould and compacted, thereby producing at least one further concrete layer, wherein the further concrete layer is arranged on the side of the core concrete layer facing away from the face concrete layer (3) and/or between the core concrete layer (2) and the face concrete layer (3).

11. Floor covering element (1) made of concrete, in particular concrete paving stone or concrete slab, comprising at least one multi-layer concrete block body with at least one concrete block underside (1.1) suitable for laying on a bedding layer of a sub-base and a concrete block upper side (1.2) opposite to this, wherein the multi-layered concrete block body comprises at least one core concrete layer (2) and at least one face concrete layer (3), wherein the face concrete layer (3) comprises at least one first face concrete section (6.1) and at least one second face concrete section (6.2), wherein the first face concrete section (6.1) comprises a first face concrete mixture (3.1) and the second face concrete section (6.2) comprises a second face concrete mixture (3.1) differing from the first face concrete mixture (3.1), wherein the floor covering element (1) thereby comprises a surface effect at an upper surface (O) at the concrete block top surface (1.2) and wherein the at least one first face concrete section (6.1) comprises a porous concrete material and the at least one second face concrete section (6.2) comprises a dense concrete material, **characterised in that** the first and second face concrete mixtures (3.1, 3.2) are mixed in sections and/or partially blended.

12. Floor covering element (1) according to claim 11, **characterised in that** the face concrete layer (3) comprises a plurality of face concrete sections (6.1 - 6.n), wherein the face concrete sections (6.1 - 6.n) are arranged randomly and irregularly distributed over the concrete block upper surface (1.2).

## Revendications

1. Procédé de fabrication d'éléments de revêtement de sol (1) en béton, en particulier pour la fabrication de pavés en béton ou de dalles en béton à l'aide d'une machine à fabriquer des pavés (20),
dans lequel les éléments de revêtement de sol (1) sont fabriqués sous forme d'éléments de revêtement de sol multicouches (1) et comportent au moins une couche de béton de base (2) fabriquée à partir d'un béton de base ainsi qu'au moins une couche de béton de parement (3) fabriquée à partir d'un béton de parement,
dans lequel, dans le procédé, le béton de base est versé dans au moins un moule (4) et compacté, le béton de parement est ensuite versé sur le béton de base compacté et également compacté, et le béton de base et le béton de parement sont durcis,
dans lequel au moins un premier mélange de béton de parement (3.1) et au moins un deuxième mélange de béton de parement (3.2) sont préparés et mis à disposition pour la fabrication de la couche de béton de parement (3), et dans lequel le béton de parement utilisé pour verser sur le béton de base compacté comprend au moins une partie du premier mélange de béton de parement (3.1) et au moins une partie du deuxième mélange de béton de parement (3.2), dans lequel le premier mélange de béton de parement (3.1) est un matériau de béton à structure dense et le deuxième mélange de béton de parement (3.2) est un matériau de béton à structure poreuse, dans lequel le béton de parement versé sur le béton de base compacté et comprenant les premier et deuxième mélanges de béton de parement (3.1, 3.2) est réparti sur la couche de béton de base (2) à l'aide d'un dispositif de répartition (26) avant le compactage, et dans lequel le premier et le deuxième mélange de béton de parement (3.1, 3.2) sont mélangés au moins par sections et/ou partiellement mélangés.

2. Procédé selon la revendication 1, **caractérisé en ce que** le premier et le deuxième mélange de béton de parement (3.1, 3.2) sont préparés et mis à disposition chacun dans leur propre réservoir de stockage (21, 22).

3. Procédé selon la revendication 1 ou 2, **caractérisé en ce que** le premier mélange de béton de parement (3.1) est préparé avec une granulométrie présentant une première distribution granulométrique et **en ce que** le deuxième mélange de béton de parement (3.2) est préparé avec une granulométrie présentant une deuxième distribution granulométrique, la première et la deuxième distribution granulométrique étant différentes.

4. Procédé selon l'une des revendications 1 à 3, **caractérisé en ce que** les premier et deuxième mélanges de béton de parement (3.1, 3.2) destinés à être versé sur le béton de base compacté de la couche de béton de base (2) sont introduits simultanément ou par étapes successives dans le moule (4), dans lequel les premier et deuxième mélanges de béton de parement (3.1, 3.2) destinés à être versés dans le moule (4) sont alimentés par au moins un dispositif d'alimentation (23) et/ou **en ce que** les mélanges de béton de parement (3.1, 3.2) sont introduits de manière aléatoire dans le moule (4).

5. Procédé selon la revendication 4, **caractérisé en ce que** le premier et le deuxième mélange de béton de parement (3.1, 3.2) destinés à être versés dans le moule (4) sont alimentés ensemble et de préférence simultanément au moyen d'un dispositif d'alimentation (23) conçu comme un dispositif d'alimentation commun (23).

6. Procédé selon l'une des revendications précédentes, **caractérisé en ce que** le premier et le deuxième mélange de béton de parement (3.1, 3.2) sont versés sur le béton de base compacté de telle sorte que la couche de béton de parement (3) s'étendant sur une surface supérieure (O) de l'élément de revêtement de sol (1) comprend au moins une première section de couche de béton de parement (6.1) comprenant le premier mélange de béton de parement (3.1) et au moins une deuxième section de couche de béton de parement (6.2) comprenant le deuxième mélange de béton de parement (3.2), en particulier que la couche de béton de parement (3) est formée par plusieurs parties de couche de béton de parement (6.1, 6.2 à 6.n) différentes les unes des autres.

7. Procédé selon l'une des revendications précédentes, **caractérisé en ce que** d'autres mélanges de béton de parement (3.3 - 3.n) sont en outre préparés et mis à disposition et **en ce que** le béton de parement utilisé pour être versé sur le béton de base compacté comprend en outre au moins une partie d'un ou de plusieurs des autres mélanges de béton de parement (3.3 - 3.n).

8. Procédé selon l'une des revendications précédentes, **caractérisé en ce que** les mélanges de béton de parement (3.1, 3.2, 3.3 - 3.n) sont versés dans le moule (4) dans des proportions fixes ou choisies au hasard, dans lequel la détermination et/ou la sélection des proportions des mélanges de béton de parement (3.1, 3.2, 3.3 - 3.n) ainsi que, en particulier, leur alimentation pour être versés dans le moule (4) sont effectués de préférence au manières automatisés, en particulier commandés.

9. Procédé selon l'une des revendications précédentes, **caractérisé en ce que** la couche de béton de parement (3) est réalisée avec une épaisseur de couche (d) comprise entre 4 mm et 15 mm, de préférence entre 6 mm et 12 mm et de manière particulièrement préférée entre 8 mm et 10 mm.

10. Procédé selon l'une des revendications précédentes, **caractérisé en ce qu'**avant verser le béton de base dans au moins un moule (4) et/ou avant verser le béton de parement sur le béton de base compacté, au moins un autre matériau de béton est versé dans le moule et compacté, créant ainsi au moins une autre couche de béton, ladite autre couche de béton étant disposée sur le côté opposé à la couche de béton de parement (3) de la couche de béton de base et/ou entre la couche de béton de base (2) et la couche de béton de parement (3).

11. Élément de revêtement de sol (1) en béton, en particulier pavé en béton ou dalle en béton, comprenant au moins un corps en béton multicouche avec au moins une face inférieure (1.1) adaptée pour être poséesur une couche de fondation d'un sol et une face supérieure (1.2) opposée à celle-ci, dans lequel le corps en béton multicouche comprend au moins une couche de béton de base (2) et au moins une couche de béton de parement (3), dans lequel la couche de béton de parement (3) comprend au moins une première section de béton de parement (6.1) et au moins une deuxième section de béton de parement (6.2), dans lequel la première section de béton de parement (6.1) comprend un premier mélange de béton de parement (3.1) et la deuxième section de béton de parement (6.2) comprend un deuxième mélange de béton de parement (3.1) différent du premier mélange de béton de parement (3.1), dans lequel l'élément de revêtement de sol (1) comprend ainsi un effect de surface sur une surface supérieure (O) au niveau de la face supérieure du corps en béton (1.2) et dans lequel la au moins une première section de béton de parement (6.1) comprend un matériau de béton à structure poreuse et la au moins une deuxième section de béton de parement (6.2) comprend un matériau de béton à structure dense, **caractérisé en ce que** les premier et deuxième mélanges de béton de parement (3.1, 3.2) sont mélangés par sections et/ou partiellement mélangés .

12. Élément de revêtement de sol (1) selon la revendication 11, **caractérisé en ce que** la couche de béton de parement (3) présente une pluralité de sections de béton de parement (6.1 - 6.n), les sections de béton de parement (6.1 - 6.n) étant réparties de manière aléatoire et irrégulière sur la face supérieure (1.2) de bloc de béton.
